# EUROPÄISCHE PATENTANMELDUNG

(11) **EP 4 321 354 A1**
(43) Veröffentlichungstag der Anmeldung: **14.02.2024**
(21) Anmeldenummer: 23189876.8
(22) Anmeldetag: 04.08.2023
(51) Int. Cl.: B60G 7/00

(54) **STABFÖRMIGES FAHRWERKMODUL UND VERFAHREN ZUM HERSTELLEN EINES FAHRWERKMODULS**

(30) Priorität: 10.08.2022 DE 102022120129
(71) Anmelder: Erdrich Umformtechnik GmbH, 77871 Renchen-Ulm (DE)
(72) Erfinder: Schöttle, Markus, 78589 Dürbheim (DE); Bischler, Günther, 77855 Achern (DE); Griesbaum, Bernd, 77716 Haslach i.K. (DE); Nock, Bernd, 77784 Oberharmersbach (DE)
(74) Vertreter: Ege Lee & Roider Patentanwälte

(57) **Zusammenfassung**

Stabförmiges Fahrwerkmodul (100), das Fahrwerkmodul (100) aufweisend eine aus einem Blech unter Anwendung eines Trenn- und/oder Umformverfahrens hergestellte einschalige Modulbasis (102) mit einem einseitig offenen Querschnitt, die Modulbasis (102) aufweisend eine Basislängsachse (122), einen Rückenabschnitt (116), einen ersten Seitenabschnitt (118) und einen zweiten Seitenabschnitt (120), einen ersten Endabschnitt (106) und einen zweiten Endabschnitt (112), eine dem ersten Endabschnitt (106) zugeordnete erste Gelenkaufnahme (108) und eine dem zweiten Endabschnitt (112) zugeordnete zweite Gelenkaufnahme (114), wobei die erste Gelenkaufnahme (108) eine erste Gelenkachse (124) und die zweite Gelenkaufnahme (114) eine zweite Gelenkachse (126) aufweist und die erste Gelenkachse (124) und die zweite Gelenkachse (126) zueinander zumindest annähernd rechtwinklig angeordnet sind, bei dem die erste Gelenkaufnahme (108) mithilfe einer in dem Rückenabschnitt (116) angeordneten ersten Ausnehmung (121) gebildet ist, und Verfahren zum Herstellen eines derartigen Fahrwerkmoduls (100), wobei das Verfahren die Schritte Herstellen der Modulbasis (102) und Herstellen der ersten Ausnehmung (121) in dem Rückenabschnitt (116) umfasst.

## Beschreibung

Die Erfindung betrifft ein stabförmiges Fahrwerkmodul, das Fahrwerkmodul aufweisend eine aus einem Blech unter Anwendung eines Trenn- und/oder Umformverfahrens hergestellte einschalige Modulbasis mit einem einseitig offenen Querschnitt, die Modulbasis aufweisend eine Basislängsachse, einen Rückenabschnitt, einen ersten Seitenabschnitt und einen zweiten Seitenabschnitt, einen ersten Endabschnitt und einen zweiten Endabschnitt, eine dem ersten Endabschnitt zugeordnete erste Gelenkaufnahme und eine dem zweiten Endabschnitt zugeordnete zweite Gelenkaufnahme, wobei die erste Gelenkaufnahme eine erste Gelenkachse und die zweite Gelenkaufnahme eine zweite Gelenkachse aufweist und die erste Gelenkachse und die zweite Gelenkachse zueinander zumindest annähernd rechtwinklig angeordnet sind. Außerdem betrifft die Erfindung ein Verfahren zum Herstellen eines Fahrwerkmoduls.

Das Dokument DE 10 2016 201 036 A1 betrifft ein Bauteil, das aus mindestens zwei Einzelbauteilen besteht, die miteinander verbunden sind, insbesondere Fahrwerksbauteile für Kraftfahrzeuge. Um eine Fertigung zu vereinfachen, wird in dem Dokument DE 10 2016 201 036 A1 vorgeschlagen, das eine Einzelbauteil als Blechbauteil im Rahmen des spanlosen Umformprozesses durch Presshärten und das jeweils andere Einzelbauteil durch ein konventionelles Herstellverfahren ohne Presshärtung herzustellen.

Das Dokument DE 10 2014 223 478 A1 betrifft ein Strukturbauteil für ein Kraftfahrzeug, mit einem aus einem Blech gebildeten Bauteilkörper, der wenigstens ein aus dem Blech geformten, schalenförmiges Körperteil und wenigstens eine aus dem Blech geformte und sich entlang ihres Umfangs zwischen zwei umfangsseitigen Enden erstreckende Aufnahmebuchse umfasst, die an einem ihrer umfangsseitigen Enden in das schalenförmige Körperteil und an einem anderen ihrer umfangsseitigen Enden in eine aus dem Blech geformte und an dem schalenförmigen Körperteil festgelegte Befestigungslasche übergeht. Um dem Strukturbauteil der eingangs genannten Art eine relativ hohe Steifigkeit bei vergleichsweise geringem Fertigungsaufwand verleihen zu können, wird in dem Dokument DE 10 2014 223 478 A1 vorgeschlagen, mithilfe der Befestigungslasche das schalenförmige Körperteil zumindest bereichsweise zu einem geschlossenen Hohlprofil zu ergänzen.

Aus dem Dokument DE 10 201 6 208 579 B3 ist ein Verfahren bekannt zur Herstellung eines Fahrzeugbauteils, mit folgenden zeitlich aufeinanderfolgenden Verfahrensschritten: Einsetzen eines zumindest einseitig offenen Gelenkgehäuses in ein Durchgangsloch eines Verbindungsbauteils; stoffschlüssiges Verbinden des in das Durchgangsloch des Verbindungsbauteils eingesetzten Gelenkgehäuses mit dem Verbindungbauteil; Beschichten des Gelenkgehäuses und des Verbindungsbauteils mit einem Oberflächenschutz; Montieren eines Gelenks durch Einsetzen eines einen Lagerbereich aufweisenden Gelenkinnenteils in das Gelenkgehäuse; Verschließen des Gelenkgehäuses, sodass der Lagerbereich in dem Gelenkgehäuse eingeschlossen wird und das Gelenkinnenteil sich aus dem Gelenkgehäuse heraus erstreckt; kraftschlüssiges Verbinden des Gelenkgehäuses mit dem Verbindungsbauteil vor dem stoffschlüssigen Verbinden des Gelenkgehäuses mit dem Verbindungsbauteil.

Das Dokument DE 10 2008 043 694 A1 betrifft ein Kugelgelenk insbesondere für Fahrwerksbaugruppen und Lenkungsbaugruppen von Kraftfahrzeugen, bestehend aus einem Gehäuse mit einem Gehäuseoberteil und einem Gehäuseunterteil und einem im Gehäuse mittels einer Lagerschale gelagerten Gelenkzapfen. Um eine Schweißnaht zwischen den Gehäusebauteilen hinsichtlich einer Kraftaufnahme zu optimieren, wird in dem Dokument DE 10 2008 043 694 A1 vorgeschlagen, das Gehäuseunterteil und das Gehäuseoberteil an dem zueinander gewandten Kontaktbereich durch eine Schweißnaht miteinander zu verbinden, die in einem Winkel von 20° bis 60° zur Mittellängsachse des Kugelgelenkes geneigt ist.

Der Erfindung liegt die Aufgabe zugrunde, ein eingangs genanntes Fahrwerkmodul strukturell und/oder funktionell zu verbessern. Außerdem liegt der Erfindung die Aufgabe zugrunde, ein eingangs genanntes Verfahren strukturell und/oder funktionell zu verbessern.

Die Aufgabe wird gelöst mit einem Fahrwerkmodul mit den Merkmalen des Anspruchs 1. Außerdem wird die Aufgabe gelöst mit einem Verfahren mit den Merkmalen des Anspruchs 12. Vorteilhafte Ausführungen und/oder Weiterbildungen sind Gegenstand der abhängigen Ansprüche.

Das Fahrwerkmodul ist stabförmig ausgeführt. Das Fahrwerkmodul kann stabmechanische Eigenschaften aufweisen. Das Fahrwerkmodul weist eine Modulbasis auf. Die Modulbasis ist aus einem Blech hergestellt. Die Modulbasis ist unter Anwendung eines Trenn- und/oder Umformverfahrens hergestellt. Die Modulbasis ist einschalig hergestellt. Die Modulbasis weist einen einseitig offenen Querschnitt auf. Die Modulbasis weist eine Basislängsachse auf. Die Modulbasis weist einen Rückenabschnitt, einen ersten Seitenabschnitt und einen zweiten Seitenabschnitt auf. Der Rückenabschnitt kann eine Rückenfläche der Modulbasis bilden. Die Modulbasis weist einen ersten Endabschnitt und einen zweiten Endabschnitt auf. Die Modulbasis kann einen Mittelabschnitt aufweisen. Der Mittelabschnitt kann zwischen dem ersten Endabschnitt und dem zweiten Endabschnitt angeordnet sein. Die Modulbasis weist eine erste Gelenkaufnahme und eine zweite Gelenkaufnahme auf. Die erste Gelenkaufnahme ist dem ersten Endabschnitt zugeordnet. Die zweite Gelenkaufnahme ist dem zweiten Endabschnitt zugeordnet. Die erste Gelenkaufnahme weist eine erste Gelenkachse auf. Die zweite Gelenkaufnahme weist eine zweite Gelenkachse auf. Die erste Gelenkachse und die zweite Gelenkachse sind zueinander zumindest annähernd rechtwinklig angeordnet. Die erste Gelenkaufnahme ist mithilfe einer ersten Ausnehmung gebildet. Die erste Ausnehmung ist in dem Rückenabschnitt angeordnet.

Das Fahrwerkmodul kann ein Lenker oder Achslenker sein. Das Fahrwerkmodul kann dazu ausgelegt und/oder anordenbar sein, einen Fahrzeugradträger beweglich mit einem Fahrzeuggestell oder einer Fahrzeug-Bodengruppe zu verbinden, einen Fahrzeugradträger zu führen und/oder zwischen einer Fahrbahn und einem Fahrzeugrad wirkenden Kräfte zu übertragen. Das Fahrwerkmodul kann zum gelenkigen Verbinden ausgelegt und/oder anordenbar sein. Das Fahrwerkmodul kann zur beiderseitigen gelenkigen Anbindung ausgelegt und/oder anordenbar sein. Das Fahrwerkmodul kann auch als Stablenker bezeichnet werden. Das Fahrwerkmodul kann als Querlenker, Längslenker oder Schräglenker ausgelegt und/oder anordenbar sein. Das Fahrwerkmodul kann als Schubstrebe und/oder Zugstrebe ausgelegt und/oder anordenbar sein. Das Fahrwerkmodul kann dazu ausgelegt und/oder anordenbar sein, eine Bewegungsmöglichkeit eines Fahrzeugradträger um einen Freiheitsgrad zu reduzieren. Das Fahrwerkmodul kann eine Modullängsachse, ein erstes Ende und ein zweites Ende aufweisen.

Der erste Endabschnitt der Modulbasis kann sich ausgehend von dem ersten Ende des Fahrwerkmoduls in Richtung des Mittelabschnitts erstrecken. Der erste Endabschnitt kann sich über ca. 1/3 der Länge der Modulbasis erstrecken. Der zweite Endabschnitt der Modulbasis kann sich ausgehend von dem zweiten Ende des Fahrwerkmoduls in Richtung des Mittelabschnitts erstrecken. Der zweite Endabschnitt kann sich über ca. 1/3 der Länge der Modulbasis erstrecken. Der Mittelabschnitt kann sich über ca. 1/3 der Länge der Modulbasis erstrecken. Ein Übergang zwischen dem Mittelabschnitt und einem Endabschnitt kann fließend sein.

Die Modulbasis kann unter Anwendung eines Scherschneidverfahrens, eines Stanzverfahrens, eines Umformverfahrens, eines Biegeverfahrens, eines Prägeverfahrens, eines Kantverfahrens und/oder eines Bördelverfahrens hergestellt sein. Die Modulbasis kann unter Anwendung eines kombinierten Verfahrens hergestellt sein. Die Modulbasis kann sich entlang der Modullängsachse erstrecken. Die Basislängsachse kann zumindest abschnittsweise zur Modullängsachse koaxial oder parallel sein und/oder zumindest abschnittsweise der Modullängsachse entsprechen. Der erste Endabschnitt kann dem ersten Ende zugeordnet sein. Der zweite Endabschnitt kann dem zweiten Ende zugeordnet sein.

Die erste Gelenkaufnahme kann dazu ausgelegt und/oder angeordnet sein, ein erstes Gelenklager zu bilden, aufzunehmen, zu befestigen, zu montieren und/oder zu halten. Die erste Ausnehmung kann eine Kreisform aufweisen. Die erste Ausnehmung kann zur Aufnahme eines Gelenkhülsenteils ausgelegt und/oder angeordnet sein. Die erste Ausnehmung kann sich zumindest annähernd von dem ersten Seitenabschnitt bis zu dem zweiten Seitenabschnitt erstrecken. Die erste Ausnehmung kann eine lichte Weite und/oder einen Durchmesser aufweisen, der größer als eine Breite und/oder ein Durchmesser des ersten Gelenklagers, insbesondere eines Gelenkkopfs des ersten Gelenklagers, ist. Die erste Ausnehmung kann in einem mechanischen Trennverfahren, insbesondere in einem Scherschneidverfahren, oder in einem thermischen Trennverfahren, insbesondere in einem Laserschneidverfahren, hergestellt sein. Die erste Gelenkaufnahme kann einen Gelenkpunkt aufweisen. Der Gelenkpunkt kann zentral in der ersten Gelenkaufnahme liegen. Das erste Gelenklager kann einen Freiheitsgrad f=3 aufweisen. Das erste Gelenklager kann dazu ausgelegt sein, alle translatorischen Bewegungen zu sperren und alle rotatorische Bewegungen um den Gelenkpunkt zu ermöglichen. Das erste Gelenklager kann ein Kugelgelenk sein. Das erste Gelenklager kann einen Gelenkkopf und eine Gelenkschale aufweisen. Der Gelenkkopf kann eine kugelförmige, kugelabschnittförmige oder kugelkalottenförmige Außenseite aufweisen. Der Gelenkkopf kann als Stangenkopf mit einer Gelenkstange ausgeführt sein. Der Gelenkkopf kann ringförmig mit einer Stangenaufnahme ausgeführt sein. Die erste Gelenkachse kann einer Längsachse einer Gelenkstange oder einer Längsachse einer Stangenaufnahme eines nicht ausgelenkten Gelenkkopfs eines ersten Gelenklagers, das in der ersten Gelenkaufnahme aufnehmbar ist, entsprechen. Die erste Gelenkachse kann durch den Gelenkpunkt verlaufen. Die erste Gelenkachse kann zentral durch die erste Gelenkaufnahme verlaufen. Die erste Gelenkachse kann die Basislängsachse in einem ersten Schnittpunkt schneiden. Der Gelenkpunkt kann in dem ersten Schnittpunkt liegen oder mit dem ersten Schnittpunkt gebildet sein.

Die zweite Gelenkaufnahme kann zum Aufnehmen eines zweiten Gelenklagers ausgelegt sein. Das zweite Gelenklager kann ein Gummilager sein. Die zweite Gelenkaufnahme kann mithilfe wenigstens einer zweiten Ausnehmung gebildet sein. Die zweite Gelenkaufnahme kann mithilfe von zwei zweiten Ausnehmungen gebildet sein. Die wenigstens eine zweite Ausnehmung kann eine Kreisform aufweisen. Die wenigstens eine zweite Ausnehmung kann in einem mechanischen Trennverfahren, insbesondere in einem Scherschneidverfahren, oder in einem thermischen Trennverfahren, insbesondere in einem Laserschneidverfahren, hergestellt sein. Das zweite Gelenklager kann zum Lagern des Fahrwerkmoduls an einem zapfenartigen Verbindungsteil ausgelegt sein. Das Verbindungsteil kann eine Verbindungsachse aufweisen. Das zweite Gelenklager kann einen begrenzten Freiheitsgrad f=6 aufweisen. Das zweite Gelenklager kann dazu ausgelegt sein, begrenzte translatorische Bewegungen und begrenzte rotatorische Bewegungen zu ermöglichen. Die zweite Gelenkachse kann einer Verbindungsachse eines zapfenartigen Verbindungsteils, an dem das Fahrwerkmodul mithilfe eines Gummilagers lagerbar ist, entsprechen. Die zweite Gelenkachse kann zentral durch die zweite Gelenkaufnahme verlaufen. Die zweite Gelenkachse kann die Basislängsachse in einem zweiten Schnittpunkt schneiden.

Der Querschnitt der Modulbasis kann dreiseitig geschossen sein. Der Querschnitt der Modulbasis kann eine Schnittfläche senkrecht zur Basislängsachse sein. Die Modulbasis kann zumindest abschnittsweise einen einseitig offenen Querschnitt aufweisen. Die Modulbasis kann wenigstens einen Längsabschnitt mit einseitig offenem Querschnitt aufweisen. Die Modulbasis kann einen Längsabschnitt oder mehrere Längsabschnitte mit einseitig offenem Querschnitt aufweisen. Die Modulbasis kann zumindest annähernd über ihre gesamte Länge einen einseitig offenen Querschnitt aufweisen. Die Modulbasis kann einen an dem ersten Endabschnitt und/oder an dem zweiten Endabschnitt auslaufenden einseitig offenen Querschnitt aufweisen. Die Modulbasis kann einen U-förmigen Querschnitt aufweisen. Die Seitenabschnitte können Vertikalstrichen des Querschnitt-"U"s und der Rückenabschnitt kann einem Bogenstrich des Querschnitt-"U"s zugeordnet sein. Der Querschnitt der Modulbasis kann dem Rückenabschnitt gegenüberliegend offen sein.

Die wenigstens eine zweite Ausnehmung oder eine der zwei zweiten Ausnehmungen kann in dem ersten Seitenabschnitt angeordnet sein. Die wenigstens eine zweite Ausnehmung oder eine der zwei zweiten Ausnehmungen kann in dem zweiten Seitenabschnitt angeordnet sein. Die wenigstens eine zweite Ausnehmung kann einen Flansch oder Bundkragen aufweisen. Die Flansche oder Bundkragen der zwei zweiten Ausnehmungen können zueinander hin- oder einander entgegengerichtet sein und/oder aneinander anliegen.

Der erste Seitenabschnitt kann einen ersten Kantenabschnitt aufweisen. Der zweite Seitenabschnitt kann einen zweiten Kantenabschnitt aufweisen. Die Kantenabschnitte können den freien Enden der Vertikalstriche des Querschnitt-"U"s zugeordnet sein. Der Rückenabschnitt kann eine Rückenfläche aufweisen und/oder bilden. Die Rückenfläche kann zumindest abschnittsweise eben sein. Die Rückenfläche kann zumindest abschnittsweise einfach oder mehrfach gekrümmt und/oder gewölbt sein. Der erste Seitenabschnitt kann eine erste Seitenfläche aufweisen und/oder bilden. Die erste Seitenfläche kann zumindest abschnittsweise eben sein. Der zweite Seitenabschnitt kann eine zweite Seitenfläche aufweisen. Die zweite Seitenfläche kann zumindest abschnittsweise eben sein. Die Rückenfläche und die erste Seitenfläche können zueinander zumindest annähernd rechtwinklig angeordnet sein. Die Rückenfläche und die zweite Seitenfläche können zueinander zumindest annähernd rechtwinklig angeordnet sein. Die erste Seitenfläche und die zweite Seitenfläche können voneinander beabstandet angeordnet sein. Die erste Seitenfläche und die zweite Seitenfläche können zueinander zumindest annähernd parallel angeordnet sein. Die Rückenfläche, die erste Seitenfläche und die zweite Seitenfläche können zumindest abschnittsweise zumindest annähernd parallel zur Basislängsachse angeordnet sein.

Die erste Gelenkachse kann zumindest annähernd rechtwinklig zur Rückenfläche angeordnet sein. Die erste Gelenkachse kann zumindest annähernd parallel zur ersten Seitenfläche und zur zweiten Seitenfläche angeordnet sein. Die zweite Gelenkachse kann zumindest annähernd parallel zur Rückenfläche angeordnet sein. Die zweite Gelenkachse kann zumindest annähernd rechtwinklig zur ersten Seitenfläche und zur zweiten Seitenfläche angeordnet sein.

"Einschalig" kann vorliegend insbesondere bedeuten, dass die Modulbasis eine schalenartige oder rinnenartige Form aufweist und/oder dass die Modulbasis einstückig oder aus einem Stück hergestellt ist. Die schalenartige oder rinnenartige Form kann durch einen Bodenabschnitt und Wandabschnitte charakterisiert sein. Der Rückenabschnitt, der erste Seitenabschnitt und der zweite Seitenabschnitt können einstückig oder aus einem Stück hergestellt sein. Der Rückenabschnitt kann auch als Bodenabschnitt angesehen oder bezeichnet werden. Die Seitenabschnitte können auch als Wandabschnitte angesehen oder bezeichnet werden.

Die Modulbasis kann wenigstens einen Versteifungsabschnitt aufweisen. Der wenigstens eine Versteifungsabschnitt kann durch abschnittsweises Umformen der Modulbasis gebildet sein. Der wenigstens eine Versteifungsabschnitt kann mithilfe einer Bördelung, einer Kante, eines Falzes und/oder einer Sicke gebildet sein. Der wenigstens eine Versteifungsabschnitt kann durch Bördeln, Kanten, Falzen und/oder Verprägen hergestellt sein. Der wenigstens eine Versteifungsabschnitt kann an dem ersten Kantenabschnitt, an dem zweiten Kantenabschnitt, an der Rückenfläche, an der ersten Seitenfläche oder an der zweiten Seitenfläche angeordnet sein. Die Modulbasis kann mehrere Versteifungsabschnitte aufweisen.

Das Fahrwerkmodul kann wenigstens ein Versteifungselement aufweisen. Das wenigstens eine Versteifungselement kann an dem ersten Endabschnitt angeordnet sein. Das wenigstens eine Versteifungselement kann dazu ausgelegt und/oder angeordnet sein, einen Widerstand gegen eine Verformung zu erhöhen. Das wenigstens eine Versteifungselement kann dazu ausgelegt und/oder angeordnet sein, einen Widerstand gegen eine Verformung zu erhöhen, die durch über die erste Gelenkaufnahme in die Modulbasis eingeleitete Kräfte und/oder Momente aufgeprägt wird. Das wenigstens eine Versteifungselement kann angrenzend an die erste Ausnehmung und/oder an ein in der ersten Ausnehmung aufgenommenes Gelenkhülsenteil angeordnet sein. Das wenigstens eine Versteifungselement kann sich über einen Teillängsabschnitt der Modulbasis erstrecken. Das wenigstens eine Versteifungselement kann an dem ersten Endabschnitt oder an dem zweiten Endabschnitt der Modulbasis angeordnet sein. Das wenigstens eine Versteifungselement kann sich ausgehend von dem ersten Endabschnitt in Richtung des Mittelabschnitts, bis zu dem Mittelabschnitt oder bis in den Mittelabschnitt hinein erstecken. Das Fahrwerkmodul kann ein Gelenkhülsenteil aufweisen. Das wenigstens eine Versteifungselement kann zwischen dem ersten Seitenabschnitt, dem zweiten Seitenabschnitt und/oder dem Gelenkhülsenteil wirksam sein. Das wenigstens eine Versteifungselement kann zwischen der Modulbasis und dem Gelenkhülsenteil wirksam sein. Das wenigstens eine Versteifungselement kann zwischen dem ersten Seitenabschnitt und dem zweiten Seitenabschnitt wirksam sein. Das wenigstens eine Versteifungselement kann mit dem ersten Seitenabschnitt, dem zweiten Seitenabschnitt und/oder dem Gelenkhülsenteil fest verbunden sein. "Fest" verbunden kann vorliegend insbesondere als "zerstörungsfrei unlösbar", "nur zerstörend lösbar", "stoffschlüssig" oder "durch einstückiges Herstellen" verbunden verstanden werden. Das wenigstens eine Versteifungselement kann mit dem ersten Kantenabschnitt und dem zweiten Kantenabschnitt fest verbunden sein. Die feste Verbindung kann durch einteiliges Herstellen oder stoffschlüssiges Verbinden, wie Verschweißen, insbesondere in einem Strahlschweißverfahren, hergestellt worden sein. Das wenigstens eine Versteifungselement kann zunächst von der Modulbasis gesondert hergestellt und nachfolgend mit der Modulbasis fest verbunden, insbesondere verschweißt, worden sein. Das wenigstens eine Versteifungselement kann abschnittsweise mit der Modulbasis einstückig hergestellt und abschnittsweise mit der Modulbasis fest verbunden, insbesondere verschweißt, worden sein. Das wenigstens eine Versteifungselement kann durch einstückiges Herstellen mit einem der Seitenabschnitte mit diesem fest verbunden und mit dem anderen der Seitenabschnitte oder mit einem weiteren Versteifungselement durch Verschweißen fest verbunden worden sein. Das wenigstens eine Versteifungselement kann aus einem Blech unter Anwendung eines Trenn- und/oder Umformverfahrens hergestellt sein. Das wenigstens eine Versteifungselement kann seinerseits wenigstens einen Versteifungsabschnitt aufweisen. Der wenigstens eine Versteifungsabschnitt des wenigstens einen Versteifungselements kann wie der wenigstens eine Versteifungsabschnitt der Modulbasis gebildet sein.

Die Modulbasis kann wenigstens eine Kröpfung aufweisen. Die wenigstens eine Kröpfung kann als einfache Kröpfung, als Doppelkröpfung oder als Mehrfachkröpfung ausgeführt sein. Die Modulbasis kann in einer Ebene, in zwei Ebenen und/oder in mehreren Ebenen, um eine Achse, um zwei Achsen und/oder um mehrere Achsen gekröpft sein. Die Basislängsachse und die zweite Gelenkachse können rechtwinklig zueinander angeordnet sein. Die Modulbasis kann um eine zur Basislängsachse rechtwinklige und zur zweiten Gelenkachse parallele Kröpfungsachse und/oder um eine zur Basislängsachse koaxiale oder parallele Kröpfungsachse gekröpft sein. Die wenigstens eine Kröpfung kann an dem ersten Endabschnitt angeordnet sein. Die erste Gelenkachse und die Basislängsachse können einen von 90° abweichenden Winkel einschließen. Die erste Gelenkachse und die Basislängsachse können einen um +/- 0° bis ca. 30° von 90° abweichenden Winkel einschließen. Die erste Gelenkachse und die zweite Gelenkachse können einen von 90° abweichenden Winkel einschließen. Die erste Gelenkachse und die zweite Gelenkachse können einen um +/- 0° bis ca. 30° von 90° abweichenden Winkel einschließen. Der Rückenabschnitt kann an der wenigstens einen Kröpfung verbreitert sein. Die wenigstens eine Kröpfung kann bogenartig oder löffelartig ausgeführt sein.

Das Gelenkhülsenteil kann eine hohlzylinderartige oder hülsenartige Form mit einer radialen Innenfläche und einer radialen Außenfläche aufweisen. Die Außenfläche kann eine zylindermantelförmig sein. Das Gelenkhülsenteil kann innenseitig wenigstens einen Kragenabschnitt aufweisen. Das Gelenkhülsenteil kann innenseitig einen axial äußeren Kragenabschnitt und/oder einen axial inneren Kragenabschnitt aufweisen. Das Gelenkhülsenteil kann einen ersten Axialabschnitt und einen zweiten Axialabschnitt aufweisen. Der erste Axialabschnitt kann axial außen angeordnet sein. Der zweite Axialabschnitt kann axial innen angeordnet sein. Das Gelenkhülsenteil kann einen Verbindungsabschnitt aufweisen. Der Verbindungsabschnitt kann zwischen dem ersten Axialabschnitt und dem zweiten Axialabschnitt angeordnet sein. Die Bezeichnung "Axialabschnitt" bezieht sich in diesem Zusammenhang insbesondere auf die erste Gelenkachse. Die Bezeichnungen "axial innen" und "axial außen" beziehen sich in diesem Zusammenhang insbesondere auf einen mit dem Rückenabschnitt und den Seitenabschnitten gebildeten Innenraum der Modulbasis. Ein axial außen angeordneter Axialabschnitt ist dann außerhalb des Innenraums oder außenseitig des Rückenabschnitts angeordnet. Ein axial innen angeordneter Axialabschnitt ist dann innerhalb des Innenraums oder innenseitig des Rückenabschnitts angeordnet. Das Gelenkhülsenteil kann einen Hülsenabschnitt aufweisen oder bilden. Der Verbindungsabschnitt kann kragenartig, flanschartig, absatzartig, stufenartig, sickenartig oder nutartig ausgeführt sein. Das Gelenkhülsenteil kann an seinem Verbindungsabschnitt mit der Modulbasis verbunden sein. Das Gelenkhülsenteil kann an der ersten Gelenkaufnahme angeordnet sein. Das Gelenkhülsenteil kann in der ersten Aufnahme aufgenommen sein. Das Gelenkhülsenteil kann mit der Modulbasis fest verbunden sein. Das Gelenkhülsenteil kann zunächst von der Modulbasis gesondert hergestellt und nachfolgend mit der Modulbasis fest verbunden worden sein. Die Modulbasis und das Gelenkhülsenteil können miteinander fest verbunden sein. Die Modulbasis und das Gelenkhülsenteil können miteinander in einem Schweißverfahren, insbesondere in einem Strahlschweißverfahren, verbunden sein. Der Rückenabschnitt kann eine Fügefläche für das Gelenkhülsenteil aufweisen. Die Fügefläche kann eben sein. Die Fügefläche kann an der ersten Gelenkaufnahme angeordnet sein. Die Fügefläche kann entsprechend einer Kröpfung der Modulbasis zu der Rückenfläche winklig und/oder von der Basislängsachse beabstandet angeordnet sein. Die Fügefläche kann zum Verschweißen des Gelenkhülsenteils mit der Modulbasis freigestellt sein. Der Verbindungsabschnitt des Gelenkhülsenteils und die Fügefläche des Rückenabschnitts können miteinander fest verbunden sein.

Das Gelenkhülsenteil kann unter Anwendung eines Umformverfahrens hergestellt sein. Das Gelenkhülsenteil kann unter Anwendung eines Massivumformverfahrens hergestellt sein. Das Gelenkhülsenteil kann unter Anwendung eines Druckumformverfahrens, insbesondere eines Fließpressverfahrens, hergestellt sein. Das Gelenkhülsenteil kann aus einem Draht, insbesondere aus einem Stauchdraht, hergestellt sein. Das Gelenkhülsenteil kann unter Anwendung eines Trenn- und/oder Umformverfahrens, insbesondere unter Anwendung eines Stanz-Biege-Verfahrens, hergestellt sein. Das Gelenkhülsenteil kann aus einem Blech hergestellt sein.

Das Gelenkhülsenteil kann dazu ausgelegt und/oder angeordnet sein, ein gebautes Gelenklager, insbesondere Kugelgelenk, zu bilden, aufzunehmen, zu befestigen, zu montieren und/oder zu halten. Das Gelenkhülsenteil kann ein Gehäuse oder ein Gehäuseteil eines Gelenklagers bilden. Das Gelenkhülsenteil kann ein einteiliges und/oder einstückiges Gehäuse oder Gehäuseteil bilden. Das Gelenkhülsenteil kann ein einteilig und/oder einstückig hergestelltes Gehäuse oder Gehäuseteil bilden. Das Gelenkhülsenteil kann dazu ausgelegt und/oder angeordnet sein, einen Formraum zu begrenzen. Der Formraum kann zum Herstellen einer Kugelgelenkpfanne aus einem Kunststoff in einem Spritzverfahren ausgelegt sein. Der Formraum kann von dem Gelenkhülsenteil begrenzt sein. Der Formraum kann gemeinsam von dem Gelenkhülsenteil und der Modulbasis, insbesondere dem Rückenabschnitt, begrenzt sein.

Die Modulbasis kann wenigstens einen Befestigungsabschnitt aufweisen. Der wenigstens eine Befestigungsabschnitt kann an dem Rückenabschnitt, an dem ersten Seitenabschnitt oder an dem zweiten Seitenabschnitt angeordnet sein. Der wenigstens eine Befestigungsabschnitt kann zur Anbindung von Anbauteilen, beispielsweise mithilfe von Kabelclips, ausgelegt sein. Der wenigstens eine Befestigungsabschnitt kann mithilfe einer weiteren Ausnehmung gebildet sein. Die Modulbasis kann wenigstens eine weitere Ausnehmung aufweisen. Die wenigstens eine weitere Ausnehmung kann kreisförmig, langlochförmig, polygonartig oder viereckig ausgeführt sein. Die wenigstens eine weitere Ausnehmung kann in dem Rückenabschnitt, in dem ersten Seitenabschnitt oder in dem wenigstens einen zweiten Seitenabschnitt angeordnet sein. Die wenigstens eine Ausnehmung kann in einem mechanischen Trennverfahren, insbesondere in einem Scherschneidverfahren, oder in einem thermischen Trennverfahren, insbesondere in einem Laserschneidverfahren, hergestellt sein.

Die Modulbasis, das Versteifungselement und/oder das Gelenkhülsenteil können/kann aus einem Stahl, insbesondere aus einem hochfesten oder höherfesten Stahl, hergestellt sein. Die Modulbasis, das Versteifungselement und/oder das Gelenkhülsenteil können/kann unter Anwendung eines Kaltumformverfahrens, eines Halbwarmumformverfahrens und/oder eines Warmumformverfahrens hergestellt sein.

Zum Herstellen des Fahrzeugmoduls werden die Schritte Herstellen der Modulbasis und Herstellen der ersten Ausnehmung in dem Rückenabschnitt ausgeführt. Die Schritte Herstellen der Modulbasis und Herstellen der ersten Ausnehmung in dem Rückenabschnitt können zeitgleich oder zeitlich versetzt ausgeführt werden. Zum Herstellen des Fahrzeugmoduls können die Schritte Herstellen eines Gelenkhülsenteils, Anordnen des Gelenkhülsenteils in der ersten Ausnehmung und festes Verbinden der Modulbasis und des Gelenkhülsenteils miteinander ausgeführt werden.

Die Modulbasis, das Versteifungselement und/oder das Gelenkhülsenteil können jeweils in einem einzigen Werkzeug hergestellt werden. Die Modulbasis, das Versteifungselement und/oder das Gelenkhülsenteil können jeweils fertigfallend hergestellt werden.

Zusammenfassend und mit anderen Worten dargestellt ergibt sich somit durch die Erfindung unter anderem ein Fahrwerksbauteil für ein Kraftfahrzeug, insbesondere ein einschaliger/einteiliger umformtechnisch hergestellter Blechlenkerkörper ohne Nachbearbeitung mit U- förmigem Design und gefügtem Gelenkgehäuse. Der Blechlenkerkörper kann auch als Modulbasis bezeichnet werden. Das Gelenkgehäuse kann auch als Gelenkhülse bezeichnet werden. Das Gelenkgehäuse kann dabei mit dem Blechlenkerkörper verbunden und zudem mit einem als Versteifungsblech ausgeführten Versteifungselement verbunden sein (ein- oder zweischnittige Verbindung). Durch ein oder mehrere zusätzliche Versteifungsblech/e, welche/s ebenfalls fertigfallend in einem Trenn-Umformverfahren oder Trennverfahren hergestellt werden kann/können, kann das Bauteil partiell zusätzlich stabilisiert werden (Lasten, Steifigkeiten). Das Versteifungsblech kann dabei flexibel auf die Anforderungen angepasst sein (Blechdicke/Festigkeit/Abmaße) Das Bauteil kann zusätzlich geometrische Versteifungsabschnitte (Sicke, gebördelter Rand) aufweisen, die lokal ein Versagen verhindern und optimal an die Anforderungen angepasst werden können. Eine starke Kröpfung zwischen den Anbindungsbereichen in zwei Ebenen kann vorhanden sein, könnte aber auch nur in einer Ebene ausgebildet sein. Anbindungsmöglichkeiten für Anbauteile z.B. für Kabelclips können leicht realisiert werden. Der Anbindungsbereich für ein Lager kann während des Umformvorgangs des Blechlenkerkörpers fertig hergestellt werden, ein nachträgliches Bearbeiten kann entfallen. Durch Verwenden von hoch- bzw. höchstfestem Stahlblech ist es möglich, sowohl Gewicht als auch CO₂-Emissionen zu reduzieren.

Das Blechumformbauteil kann geometrisch optimiert und damit leicht sowie wirtschaftlich herstellbar aus hoch-/höchstfestem Stahlblech hergestellt sein und Stahl- und Aluminium-Schmiedelenker substituieren. Durch einen geringeren Materialeinsatz und Verwendung eines Stahlwerkstoffs kann ein CO₂-Fußabdruck erheblich reduziert werden. Zusätzliche Versteifungsabschnitte können zur Reduktion des Bauteilgewichts und der Bauteilkosten beitragen. Aufgrund zusätzlicher Versteifungsbleche ist eine flexible Anpassung des Bauteils an die Forderungen möglich. Durch den zusätzlichen Anbindungsbereich für Anbauteile können diese wirtschaftlicher gestaltet und gefertigt werden. Der Fertigungsprozess des Blechlenkerkörpers kann ebenfalls den Anbindungsbereich des Lagers beinhalten, wodurch eine spanende Nachbearbeitung entfallen kann und die Bauteilkosten reduziert werden können.

Mit der Erfindung wird ein Aufwand, wie Kostenaufwand, Zeitaufwand, Herstellungsaufwand und/oder Materialaufwand, reduziert. Ein Gewicht und/oder ein CO₂-Fußabdruck werden/wird reduziert. Eine Flexibilität wird erhöht.

Nachfolgend werden Ausführungsbeispiele der Erfindung unter Bezugnahme auf Figuren näher beschrieben, dabei zeigen schematisch und beispielhaft:
- Fig. 1: einen Fahrwerkslenker mit einer Modulbasis und einem Gelenkhülsenteil in axonometrischer Ansicht von schräg oben,
- Fig. 2: einen Fahrwerkslenker mit einer Modulbasis und einem Gelenkhülsenteil in axonometrischer Ansicht von schräg unten und
- Fig. 3: einen Fahrwerkslenker mit einer Modulbasis und einem Gelenkhülsenteil in Schnittansicht.

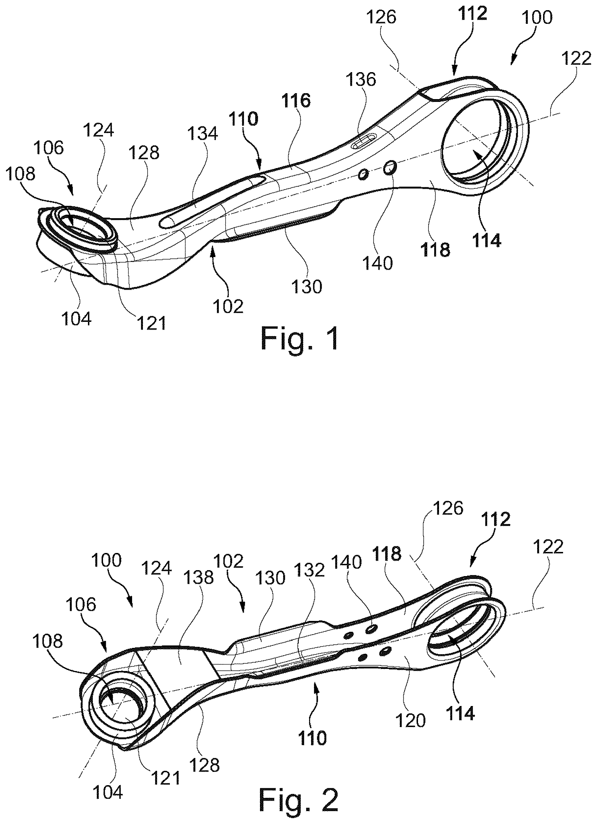

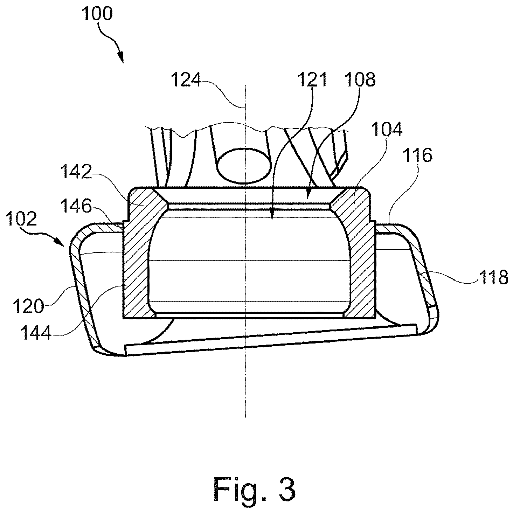

Fig. 1 zeigt ein als Fahrwerkslenker ausgeführtes stabförmiges Fahrwerkmodul 100 für ein Kraftfahrzeug mit einer Modulbasis 102 und einem Gelenkhülsenteil 104 von schräg oben. Fig. 2 zeigt das Fahrwerkmodul 100 von schräg unten. Fig. 3 zeigt das Fahrwerkmodul 100 in Schnittansicht. Das Fahrwerkmodul 100 ist dazu ausgelegt, einen Fahrzeugradträger beweglich mit einer Fahrzeug-Bodengruppe zu verbinden, den Fahrzeugradträger zu führen und zwischen einer Fahrbahn und einem Fahrzeugrad wirkenden Kräfte zu übertragen.

Die Modulbasis 102 weist einen ersten Endabschnitt 106 mit einer ersten Gelenkaufnahme 108, einen Mittelabschnitt 1 10, einen zweiten Endabschnitt 112 mit einer zweiten Gelenkaufnahme 114, einen Rückenabschnitt 116 mit einer zumindest abschnittsweise ebenen Rückenfläche, einen ersten Seitenabschnitt 118 mit einer zumindest abschnittsweise ebenen ersten Seitenfläche und einen zweiten Seitenabschnitt 120 mit einer zumindest abschnittsweise ebenen zweiten Seitenfläche auf. Die erste Gelenkaufnahme 108 ist mithilfe einer ersten Ausnehmung 121 in dem Rückenabschnitt 116 gebildet und zum Aufnehmen eines Gelenklagers ausgelegt. Die zweite Gelenkaufnahme 114 ist mithilfe einer zweiten Ausnehmung in dem ersten Seitenabschnitt 118 und einer zweiten Ausnehmung in dem zweiten Seitenabschnitt 120 gebildet. Die zweiten Ausnehmungen weisen zueinander hin gerichtete Flansche oder Bundkragen auf. Die zweite Gelenkaufnahme 114 ist zum Aufnehmen eines Gummilagers ausgelegt. Der Rückenabschnitt 116, der erste Seitenabschnitt 118 und der zweite Seitenabschnitt 120 bilden einen einseitig offenen, U-förmigen Querschnitt der Modulbasis 102. Die Modulbasis 102 erstreckt sich entlang einer Basislängsachse 122, die erste Gelenkaufnahme 108 weist eine erste Gelenkachse 124 auf, die zweite Gelenkaufnahme 114 weist eine zweite Gelenkachse 126 auf. Die Modulbasis 102 ist aus einem hochfesten Stahlblech, unter Anwendung eines Stanz-Biege-Verfahrens, einstückig aus einer zusammenhängenden Platine, fertigfallend hergestellt.

Die Basislängsachse 122 und die zweite Gelenkachse 126 sind rechtwinklig zueinander angeordnet. Die Modulbasis 102 weist eine Kröpfung 128 um eine zur Basislängsachse rechtwinklige und zur zweiten Gelenkachse parallele erste Kröpfungsachse und um eine zur Basislängsachse koaxiale oder parallele zweite Kröpfungsachse auf, sodass die erste Gelenkachse 124 und die Basislängsachse 122 einen um ca. 15° bis ca. 20° von 90° abweichenden Winkel einschließen und die erste Gelenkachse 124 und die zweite Gelenkachse 126 einen um ca. 5° bis ca. 10° von 90° abweichenden Winkel einschließen.

Der erste Seitenabschnitt 118 weist einen ersten Kantenabschnitt auf, der zweite Seitenabschnitt 120 weist einen zweiten Kantenabschnitt auf. Die Seitenabschnitte 118, 120 sind an den Kantenabschnitten jeweils nach außen gekantet oder gebördelt, sodass Versteifungsabschnitte 130, 132 gebildet sind. Weitere Versteifungsabschnitte 134, 136 sind mit sickenartigen Verprägungen am Rückenabschnitt 116 gebildet. Zusätzlich weist das Fahrwerkmodul 102 ein Versteifungselement 138 auf, das an dem ersten Endabschnitt 106 angeordnet ist und sich über einen Teillängsabschnitt der Modulbasis 102 erstreckt. Das Versteifungselement 138 ist ebenfalls aus einem hochfesten Stahlblech fertigfallend hergestellt und mit den Kantenabschnitten der Seitenabschnitte 118, 120 laserverschweißt.

Das Gelenkhülsenteil 104 ist unter Anwendung eines Fließpressverfahrens aus einem Kaltstauchdraht hergestellt und weist, wie in der Schnittansicht entlang der ersten Gelenkachse 124 gemäß Fig. 3 ersichtlich, eine hülsenartige Form mit einem außenseitig des Rückenabschnitts 116 angeordneten ersten Axialabschnitt 142, einem innenseitig des Rückenabschnitts 116 angeordneten zweiten Axialabschnitt 144 und einem zwischen dem ersten Axialabschnitt 142 und dem zweiten Axialabschnitt 144 angeordneten Verbindungsabschnitt 146 auf. Das Gelenkhülsenteil 104 ist an der ersten Gelenkaufnahme 108 angeordnet und in die erste Ausnehmung 121 eingesetzt. Der Verbindungsabschnitt 146 ist mit einem Fügeabschnitt des Rückenabschnitts 116 laserverschweißt. Das Gelenkhülsenteil 104 ist zum Montieren eines gebauten Kugelgelenks oder zum Begrenzen eines Formraums zum Herstellen einer Kugelgelenkpfanne aus einem Kunststoff in einem Spritzverfahren, ausgelegt.

An dem ersten Seitenabschnitt 118 und an dem zweiten Seitenabschnitt 120 weist die Modulbasis 102 mithilfe weiterer Ausnehmungen gebildet Befestigungsabschnitte, wie 140, zur Anbindung von Anbauteilen, beispielsweise mithilfe von Kabelclips, auf.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Fahrwerkmodul
- 102: Modulbasis
- 104: Gelenkhülsenteil
- 106: erster Endabschnitt
- 108: erste Gelenkaufnahme
- 110: Mittelabschnitt
- 112: zweiter Endabschnitt
- 114: zweite Gelenkaufnahme
- 116: Rückenabschnitt
- 118: erster Seitenabschnitt
- 120: zweiter Seitenabschnitt
- 121: erste Ausnehmung
- 122: Basislängsachse
- 124: erste Gelenkachse
- 126: zweite Gelenkachse
- 128: Kröpfung
- 130: Versteifungsabschnitt
- 132: Versteifungsabschnitt
- 134: Versteifungsabschnitt
- 136: Versteifungsabschnitt
- 138: Versteifungselement
- 140: Befestigungsabschnitt
- 142: erster Axialabschnitt
- 144: zweiter Axialabschnitt
- 146: Verbindungsabschnitt

## Patentansprüche

**1.** Stabförmiges Fahrwerkmodul (100), das Fahrwerkmodul (100) aufweisend eine aus einem Blech unter Anwendung eines Trenn- und/oder Umformverfahrens hergestellte einschalige Modulbasis (102) mit einem einseitig offenen Querschnitt, die Modulbasis (102) aufweisend eine Basislängsachse (122), einen Rückenabschnitt (116), einen ersten Seitenabschnitt (118) und einen zweiten Seitenabschnitt (120), einen ersten Endabschnitt (106) und einen zweiten Endabschnitt (112), eine dem ersten Endabschnitt (106) zugeordnete erste Gelenkaufnahme (108) und eine dem zweiten Endabschnitt (112) zugeordnete zweite Gelenkaufnahme (114), wobei die erste Gelenkaufnahme (108) eine erste Gelenkachse (124) und die zweite Gelenkaufnahme (114) eine zweite Gelenkachse (126) aufweist und die erste Gelenkachse (124) und die zweite Gelenkachse (126) zueinander zumindest annähernd rechtwinklig angeordnet sind, **dadurch gekennzeichnet, dass** die erste Gelenkaufnahme (108) mithilfe einer in dem Rückenabschnitt (116) angeordneten ersten Ausnehmung (121) gebildet ist.

**2.** Fahrwerkmodul (100) nach Anspruch 1, **dadurch gekennzeichnet, dass** die erste Ausnehmung (121) zur Aufnahme eines Gelenkhülsenteils (104) ausgelegt und/oder angeordnet ist.

**3.** Fahrwerkmodul (100) nach wenigstens einem der vorhergehenden Ansprüche, **dadurch gekennzeichnet, dass** das Fahrwerkmodul (100) wenigstens ein an dem ersten Endabschnitt (106) angeordnetes Versteifungselement (138) aufweist.

**4.** Fahrwerkmodul (100) nach Anspruch 3, **dadurch gekennzeichnet, dass** das wenigstens eine Versteifungselement (138) dazu ausgelegt und/oder angeordnet ist, einen Widerstand gegen eine Verformung durch über die erste Gelenkaufnahme (108) in die Modulbasis (102) eingeleitete Kräfte und/oder Momente zu erhöhen.

**5.** Fahrwerkmodul (100) nach wenigstens einem der vorhergehenden Ansprüche, **dadurch gekennzeichnet, dass** die Modulbasis (102) wenigstens eine Kröpfung (128) aufweist.

**6.** Fahrwerkmodul (100) nach wenigstens einem der vorhergehenden Ansprüche, **dadurch gekennzeichnet, dass** das Fahrwerkmodul (100) ein in der ersten Aufnahme (121) aufgenommenes und mit der Modulbasis (102) fest verbundenes Gelenkhülsenteil (104) aufweist.

**8.** Fahrwerkmodul (100) nach wenigstens einem der Ansprüche 6 bis 7, **dadurch gekennzeichnet, dass** das Gelenkhülsenteil (104) einen Hülsenabschnitt mit einem ersten Axialabschnitt (142) und einem zweiten Axialabschnitt (144) und einen zwischen dem ersten Axialabschnitt (142) und dem zweiten Axialabschnitt (144) angeordneten Verbindungsabschnitt (146) zur Verbindung mit der Modulbasis (102) aufweist.

**9.** Fahrwerkmodul (100) nach wenigstens einem der Ansprüche 6 bis 8, **dadurch gekennzeichnet, dass** das Gelenkhülsenteil (104) dazu ausgelegt und/oder angeordnet ist, ein gebautes Gelenklager zu bilden, aufzunehmen, zu befestigen, zu montieren und/oder zu halten oder einen zum Herstellen einer Gelenkschale aus einem Kunststoff in einem Spritzverfahren ausgelegten Formraum zu begrenzen.

**10.** Fahrwerkmodul (100) nach wenigstens einem der vorhergehenden Ansprüche, **dadurch gekennzeichnet, dass** die Modulbasis (102) wenigstens einen Befestigungsabschnitt (140) aufweist.

**11.** Fahrwerkmodul (100) nach wenigstens einem der vorhergehenden Ansprüche, **dadurch gekennzeichnet, dass** die Modulbasis (102), das Versteifungselement (138) und/oder das Gelenkhülsenteil (104) aus einem hochfesten oder höherfesten Stahl und/oder unter Anwendung eines Kaltumformverfahrens hergestellt sind/ist.

**12.** Verfahren zum Herstellen eines Fahrwerkmoduls (100) nach wenigstens einem der vorhergehenden Ansprüche, **dadurch gekennzeichnet, dass** das Verfahren die Schritte Herstellen der Modulbasis (102) und Herstellen der ersten Ausnehmung (121) in dem Rückenabschnitt (116) aufweist.

**13.** Verfahren nach Anspruch 12, **dadurch gekennzeichnet, dass** das Verfahren die Schritte Herstellen eines Gelenkhülsenteils (104), Anordnen des Gelenkhülsenteils (104) in der ersten Ausnehmung (121) und festes Verbinden der Modulbasis (102) und des Gelenkhülsenteils (104) miteinander umfasst.
